# EUROPEAN PATENT APPLICATION

(11) **EP 3 640 266 A1**
(43) Date of publication of application: **22.04.2020**
(21) Application number: 18818374.3
(22) Date of filing: 09.05.2018
(51) Int. Cl.: C08F 4/54, B60C 1/00, C08C 19/00, C08F 4/6192, C08F 36/04, C08L 15/00

(54) **CATALYST COMPOSITION, PRODUCTION METHOD FOR MODIFIED CONJUGATED DIENE POLYMER, MODIFIED CONJUGATED DIENE POLYMER, RUBBER COMPOSITION, AND TIRE**

(30) Priority: 14.06.2017 JP 2017117004
(71) Applicant: Bridgestone Corporation, Tokyo 104-8340 (JP)
(72) Inventor: TANAKA Takatsugu, Tokyo 104-8340 (JP)
(74) Representative: Oxley, Robin John George
(86) International application number: PCT/JP2018/017920
(87) International publication number: WO 2018/230200

(57) **Abstract**

An object of the present disclosure is to provide a catalyst composition enabling a modified conjugated diene-based polymer of which main chain is modified to be produced by a simple method, and a solution thereto is a catalyst composition, comprising: a rare earth element-containing compound (A) containing a rare earth element compound or a reaction product of the rare earth element compound and a Lewis base, an organic metal compound (B) represented by a formula: YR¹ₐR²_{b}R³_{c} [wherein Y is a metal selected from Group 1, Group 2, Group 12, and Group 13 of the periodic table, R¹ and R² are each a hydrocarbon groups having 1 to 10 carbon atoms or a hydrogen atom, R³ is a hydrocarbon group having 1 to 10 carbon atoms, a is 1 and b and c are 0 when Y is a metal selected from Group 1, a and b are 1 and c is 0 when Y is a metal selected from Group 2 and Group 12, and a, b, and c are all 1 when Y is a metal selected from Group 13], and a compound having a polar functional group (C).

## Description

### TECHNICAL FIELD

The present disclosure relates to a catalyst composition, a method for producing a modified conjugated diene-based polymer, a modified conjugated diene-based polymer, a rubber composition, and a tire.

### BACKGROUND

Recently, requirements for higher fuel efficiency of automobiles have been increasing in connection with the movement of global emission control of carbon dioxide which follows a rise in concern about environmental problems. In order to meet such requirements, with respect to tire performances, reduction of rolling resistance is desired as well. Conventionally, as a method for reducing rolling resistance of tires, optimization of tire structure has been studied. However, currently performed as an ordinary method is to use one having a low tan δ (hereinafter referred to as "low loss property") and an excellent low heat generating property as a rubber composition to be used in a tire.

As a method for obtaining such a rubber composition having a low heat generating property, considered is reduction in the amount of a filler such as carbon black, silica and the like, or use of carbon black having a large particle size and the like. However, none of the methods is capable of avoiding deterioration of reinforcement performance, wear resistance and gripping performance on wet road surface of the rubber composition.

Meanwhile, as methods for obtaining a rubber composition having a low heat generating property, many techniques for improving the dispersibility of the filler in the rubber composition have been developed. Among them, particularly effective is a method in which a polymerization active site of a conjugated diene-based polymer obtained by anionic polymerization using an alkyl lithium is modified with a functional group capable of interacting with a filler. For example, Patent Literature 1 below discloses a method in which carbon black is used as a filler and a modified conjugated diene-based polymer formed by modifying a polymerization active site with a tin compound is used as a rubber component. Additionally, Patent Literature 2 below discloses a method in which carbon black is used as a filler and a modified conjugated diene-based polymer formed by modifying both polymerization active terminals with a tin compound is used as a rubber component. However, in the case of using the modified conjugated diene-based polymer each disclosed in Patent Literature 1 or 2, in a rubber composition for highly fuel-efficient tires having small amounts of the filler and the softener compounded, the effect of improving the dispersibility of the filler due to the modified conjugated diene-based polymer is high. In contrast, in a rubber composition for general-purpose tires having large amounts of the filler and the softener compounded, the effect of improving the dispersibility of the filler due to the modified conjugated diene-based polymer is not sufficiently exerted, and there is a problem in that the low loss property, fracture characteristics, and wear resistance of the rubber composition cannot be sufficiently improved.

Meanwhile, there is known a method for modifying (grafting) the main chain of a conjugated diene-based polymer with a functional group capable of interacting with a filler (e.g., Patent Literature 3 below). However, the modification of the main chain requires further a graft reaction conducted after synthesis of the polymer, and thus, a simpler method has been desired.

### CITATION LIST

### Patent Literature

Patent Literature 1: JP H5-287121 A
Patent Literature 2: JP H6-49279 A
Patent Literature 3: JP 2011-184511 A

### SUMMARY

### (Technical Problem)

It is thus an object of the present disclosure to solve the above-described problems of the conventional techniques and to provide a catalyst composition that enables production of a modified conjugated diene-based polymer of which main chain is modified by a simple method.

It is further objects of the present disclosure to provide a method for producing a modified conjugated diene-based polymer, capable of easily producing a modified conjugated diene-based polymer of which main chain is modified, a modified conjugated diene-based polymer of which main chain is modified, and further, a rubber composition and a tire, in which such a modified conjugated diene-based polymer is used.

### (Solution to Problem)

The present disclosure has the following main features in order to solve the above problems.

A catalyst composition of the present disclosure is characterized by comprising:
a rare earth element-containing compound (A) containing a rare earth element compound or a reaction product of the rare earth element compound and a Lewis base,
an organic metal compound (B) represented by the following general formula (I):

   YR¹ₐR²_{b}R³_{c} (I)

   [wherein Y is a metal selected from Group 1, Group 2, Group 12, and Group 13 of the periodic table, R¹ and R² are each a hydrocarbon group having 1 to 10 carbon atoms or a hydrogen atom, and R³ is a hydrocarbon group having 1 to 10 carbon atoms, provided that R¹, R², and R³ may be the same as or different from one another, a is 1 and b and c are 0 when Y is a metal selected from Group 1 of the periodic table, a and b are 1 and c is 0 when Y is a metal selected from Group 2 and Group 12 of the periodic table, and a, b, and c are all 1 when Y is a metal selected from Group 13 of the periodic table], and
a compound having a polar functional group (C).

Use of the catalyst composition of the present disclosure enables a modified conjugated diene-based polymer of which main chain is modified to be easily produced.

The catalyst composition of the present disclosure preferably further comprises at least one compound selected from the group consisting of an ionic compound (D) and a halogen compound (E). In this case, the polymerization activity is improved, and thus, an intended polymer can be efficiently obtained.

In a preferred example of the catalyst composition of the present disclosure, the molar amount of the compound having a polar functional group (C) is 3 times or more the molar amount of the organic metal compound (B). In this case, it is possible to achieve an intended physical property.

In another preferred example of the catalyst composition of the present disclosure, the compound having a polar functional group (C) has a carbon-carbon unsaturated bond in the molecule, in addition to the polar functional group. In this case, the compound having a polar functional group (C) is more likely to be incorporated, as a monomer, into a modified conjugated diene-based polymer to be formed.

In another preferred example of the catalyst composition of the present disclosure, the polar functional group of the compound having a polar functional group (C) has at least one selected from the group consisting of oxygen, nitrogen, sulfur, silicon, and phosphorus. In this case, the affinity of a modified conjugated diene-based polymer to be formed for the filler is further improved.

In another preferred example of the catalyst composition of the present disclosure, the polar functional group of the compound having a polar functional group (C) has at least one selected from the group consisting of an alcoholic hydroxyl group, an alkoxy group, and a substituted or unsubstituted amino group. Also in this case, the affinity of a modified conjugated diene-based polymer to be formed for the filler is further improved.

In another preferred example of the catalyst composition of the present disclosure, the molar amount of the compound having a polar functional group (C) is 30 times or more that of the rare earth element-containing compound (A). In this case, the compound having a polar functional group (C) is more likely to be incorporated into the main chain of a modified conjugated diene-based polymer to be formed.

The method for producing a modified conjugated diene-based polymer of the present disclosure is characterized by comprising a step of polymerizing a conjugated diene compound in the presence of the above-described catalyst composition. According to such a method for producing a modified conjugated diene-based polymer of the present disclosure, a modified conjugated diene-based polymer of which main chain is modified can be easily produced.

The method for producing a modified conjugated diene-based polymer of the present disclosure preferably comprises a step of reacting at least one compound selected from the group consisting of the following component (a) to component (h) with the polymerization product obtained in the step of polymerizing the conjugated diene compound:
component (a): a compound represented by the following general formula (II): 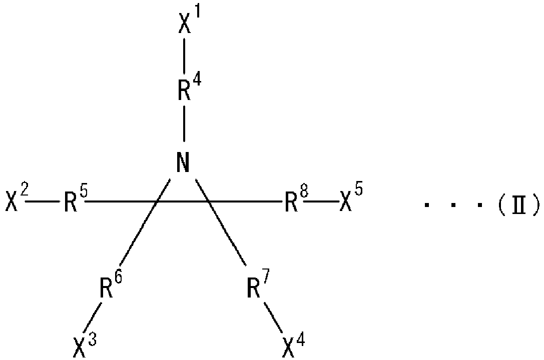 (wherein X¹ to X⁵ represent a hydrogen atom, a halogen atom, or a monovalent functional group including at least one selected from a carbonyl group, a thiocarbonyl group, an isocyanate group, a thioisocyanate group, an epoxy group, a thioepoxy group, a halogenated silyl group, a hydrocarbyloxysilyl group, and a sulfonyloxy group and excluding an active proton and an onium salt, X¹ to X⁵ may be the same or different from each other provided that at least one of them is not a hydrogen atom; R⁴ to R⁸ each independently represent a single bond or a divalent hydrocarbon group having 1 to 18 carbon atoms; and a plurality of aziridine rings may be bonded via any of X¹ to X⁵ and R⁴ to R⁸);
component (b): a halogenated organic metal compound, a metal halide compound, or an organic metal compound represented by R⁹ₙM¹Z₄₋ₙ, M¹Z₄, M¹Z₃, R¹⁰ₙM¹(-R¹¹-COOR¹²)₄₋ₙ or R¹⁰ₙM¹(-R¹¹-COR¹²)₄₋ₙ
   (wherein R⁹ to R¹¹ may be the same or different and are each a hydrocarbon group having 1 to 20 carbon atoms, R¹² is a hydrocarbon group having 1 to 20 carbon atoms and optionally containing a carbonyl group or an ester group on a side chain, M¹ is a tin atom, a silicon atom, a germanium atom, or a phosphorus atom, Z is a halogen atom, and n is an integer of 0 to 3);
component (c): a heterocumulene compound containing a Y¹=C=Y² bond in the molecule (wherein Y¹ is a carbon atom, an oxygen atom, a nitrogen atom, or sulfur atom, and Y² is an oxygen atom, a nitrogen atom, or a sulfur atom, provided that Y¹ and Y² may be the same or different from each other);
component (d): a heterotricyclic compound having a structure represented by the following general formula (III) in the molecule: 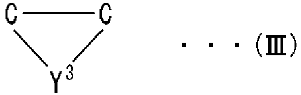 (wherein Y³ is an oxygen atom or a sulfur atom);
component (e): a haloisocyano compound;
component (f): a carboxylic acid, an acid halide, an ester compound, a carbonic acid ester compound, or an acid anhydride represented by R¹³-(COOH)ₘ, R¹⁴(COZ)ₘ, R¹⁵-(COO-R¹⁶), R¹⁷-OCOO-R¹⁸, R¹⁹-(COOCO-R²⁰)ₘ, or the following general formula (IV): 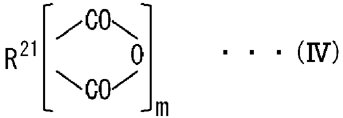 (wherein R¹³ to R²¹ may be the same or different and are each a hydrocarbon group having 1 to 50 carbon atoms, Z is a halogen atom, and m is an integer of 1 to 5);
component (g): a carboxylic acid metal salt represented by R²²ₖM²(OCOR²³)₄₋ₖ, R²⁴ₖM²(OCO-R²⁵-COOR²⁶)₄₋ₖ, or the following general formula (V): 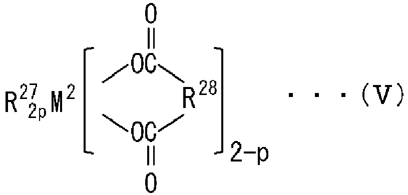 (wherein R²² to R²⁸ may be the same or different and are each a hydrocarbon group having 1 to 20 carbon atoms, M² is a tin atom, a silicon atom, or a germanium atom, k is an integer of 0 to 3, and p is an integer of 0 to 1); and
component (h): an N-substituted aminoketone, an N-substituted aminothioketone, an N-substituted aminoaldehyde, an N-substituted aminothioaldehyde, or a compound having a -C-(=Y³)-N< bond (wherein Y³ represents an oxygen atom or a sulfur atom).

In this case, it is possible to easily produce a modified conjugated diene-based polymer of which main chain is modified and additionally of which terminals are modified.

The modified conjugated diene-based polymer of the present disclosure is characterized by having been produced by the production method described above. The modified conjugated diene-based polymer of the present disclosure, when compounded in a rubber composition, can improve the low loss property, fracture characteristics, and wear resistance of the rubber composition.

The rubber composition of the present disclosure is characterized by comprising the modified conjugated diene-based polymer described above. The rubber composition of the present disclosure is excellent in low loss property, fracture characteristics, and wear resistance.

The tire of the present disclosure is characterized by use of the rubber composition described above. The tire of the present disclosure is excellent in low loss property, fracture characteristics, and wear resistance.

### (Advantageous Effect)

According to the present disclosure, it is possible to provide a catalyst composition enabling production of a modified conjugated diene-based polymer of which main chain is modified by a simple method.

According to the present disclosure, it is also possible to provide a method for producing a modified conjugated diene-based polymer, capable of easily producing a modified conjugated diene-based polymer of which main chain is modified, a modified conjugated diene-based polymer of which main chain is modified, and further, a rubber composition and a tire, in which such a modified conjugated diene-based polymer is used.

### DETAILED DESCRIPTION

Hereinbelow, the catalyst composition, the method for producing a modified conjugated diene-based polymer, the modified conjugated diene-based polymer, the rubber composition, and the tire of the present disclosure will be illustrated and described based on the embodiment thereof.

### <Catalyst composition>

A catalyst composition of the present disclosure is characterized by comprising:
a rare earth element-containing compound (A) containing a rare earth element compound or a reaction product of the rare earth element compound and a Lewis base,
an organic metal compound (B) represented by the following general formula (I):

   YR¹ₐR²_{b}R³_{c} (I)

   [wherein Y is a metal selected from Group 1, Group 2, Group 12, and Group 13 of the periodic table, R¹ and R² are each a hydrocarbon group having 1 to 10 carbon atoms or a hydrogen atom, and R³ is a hydrocarbon group having 1 to 10 carbon atoms, provided that R¹, R², and R³ may be the same as or different from one another, a is 1 and b and c are 0 when Y is a metal selected from Group 1 of the periodic table, a and b are 1 and c is 0 when Y is a metal selected from Group 2 and Group 12 of the periodic table, and a, b, and c are all 1 when Y is a metal selected from Group 13 of the periodic table], and
a compound having a polar functional group (C).

The catalyst composition of the present disclosure contains the compound having a polar functional group (C). When the catalyst composition is used for polymerization of the conjugated diene compound, the compound having a polar functional group (C) is incorporated into a conjugated diene-based polymer to be formed. Thus, use of the catalyst composition of the present disclosure enables easy production of a modified conjugated diene-based polymer that has been modified. The mechanism by which the compound having a polar functional group (C) participates in polymerization of the conjugated diene compound is not necessarily clear, but it is conceived that the compound having a polar functional group (C) reacts with the organic metal compound (B) to participate in the polymerization and thus the compound having a polar functional group (C) is incorporated into the polymer.

The compound having a polar functional group (C) has a polar functional group, and accordingly, a conjugated diene-based polymer to be formed will have the polar functional group. Since the polar functional group has an affinity for a filler, a modified conjugated diene-based polymer to be obtained by use of the catalyst composition of the present disclosure has a high affinity for the filler. For example, when the modified conjugated diene-based polymer is compounded in a rubber composition, the dispersibility of the filler in the rubber composition is improved, and it is thus possible to obtain a rubber composition excellent in low loss property, fracture characteristics, wear resistance.

The rare earth element-containing compound (A) for use in the catalyst composition of the present disclosure contains a rare earth element compound or a reaction product of the rare earth element compound and a Lewis base. Here, the rare earth element compound refers to a compound containing a lanthanoid element, scandium or yttrium. The lanthanoid elements include elements of atomic numbers 57 to 71 in the periodic table. Specific examples of the lanthanoid element can include lanthanum, cerium, praseodymium, neodymium, promethium, samarium, europium, gadolinium, terbium, dysprosium, holmium, erbium, thulium, ytterbium, and lutetium. One of the rare earth element-containing compound (A) may be used singly or two or more thereof may be used in combination.

As the rare earth element-containing compound (A), preferred are a metallocene complex represented by the following general formula (VI): 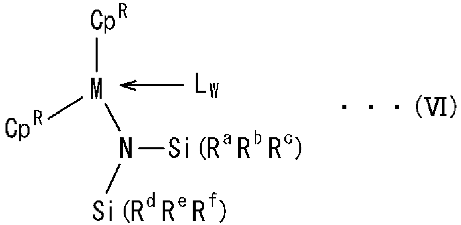 [wherein M represents a lanthanoid element, scandium, or yttrium, Cp^{R}s each independently represent substituted indenyl, R^{a} to R^{f} each independently represent an alkyl group having 1 to 3 carbon atoms or a hydrogen atom, L represents a neutral Lewis base, and w represents an integer of 0 to 3]; a metallocene complex represented by the following general formula (VII): 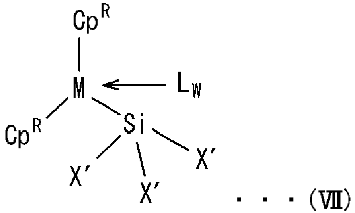 [wherein M represents a lanthanoid element, scandium, or yttrium, Cp^{R}s each independently represent substituted indenyl, X' represents a hydrogen atom, a halogen atom, an alkoxy group, a thiolate group, an amide group, a silyl group, or a hydrocarbon group having 1 to 20 carbon atoms, L represents a neutral Lewis base, and w represents an integer of 0 to 3], and a half metallocene complex represented by the following general formula (VIII): 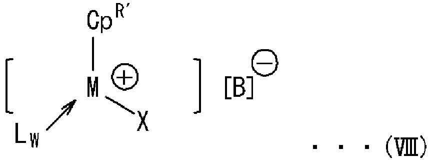 [wherein M represents a lanthanoid element, scandium, or yttrium, Cp^{R'} represents substituted cyclopentadienyl, substituted indenyl, or substituted fluorenyl, X represents a hydrogen atom, a halogen atom, an alkoxy group, a thiolate group, an amide group, a silyl group, or a hydrocarbon group having 1 to 20 carbon atoms, L represents a neutral Lewis base, w represents an integer of 0 to 3, and [B]⁻ represents a non-coordinating anion].

The central metal M in the above-described general formulas (VI), (VII), and (VIII) is a lanthanoid element, scandium, or yttrium. The lanthanoid elements include elements of atomic numbers 57 to 71, and the central metal M may be any one of them. Preferred examples of the central metal M include samarium (Sm), neodymium (Nd), praseodymium (Pr), gadolinium (Gd), cerium (Ce), holmium (Ho), scandium (Sc), and yttrium (Y).

In the metallocene complexes represented by the above-described general formulas (VI) and (VII), each Cp^{R} in the formulas is substituted indenyl. Cp^{R} having an indenyl ring as the basic skeleton may be represented by C₉H₇₋ₓRₓ or C₉H₁₁₋ₓRₓ. Wherein X is the number of substituents on the substituted indenyl group, and X is an integer of 1 to 7 or 1 to 11. It is preferred that R independently represent a hydrocarbyl group or a metalloid group. The hydrocarbyl group preferably has 1 to 20 carbon atoms, more preferably 1 to 10 carbon atoms, still more preferably 1 to 8 carbon atoms. Specific examples of the hydrocarbyl group preferably include a methyl group, an ethyl group, a tert-butyl group, a phenyl group, and a benzyl group. Meanwhile, examples of the metalloid in the metalloid group include germyl (Ge), stannyl (Sn), and silyl (Si). In addition, the metalloid group preferably has a hydrocarbyl group, and the hydrocarbyl group possessed by the metalloid group is similar to the hydrocarbyl group described above. Specific examples of the metalloid group include trialkylsilyl groups such as a trimethylsilyl group and a t-butyldimethylsilyl group. Specific examples of the substituted indenyl include 2-phenyl indenyl, 2-methyl indenyl, 1-methyl-2-phenyl indenyl, 1,3-bis(t-butyldimethylsilyl)indenyl, 1-ethyl-2-phenyl indenyl, and 1-benzyl-2-phenyl indenyl. Two Cp^{R}s in the general formulas (VI) and (VII) may be the same as or different from each other.

The metallocene complex represented by the above-described general formula (VI) include a silyl amide ligand [-N(SiR^{a}R^{b}R^{c})(SiR^{d}R^{e}R^{f})]. Each of R groups contained in the silyl amide ligand (R^{a} to R^{f} in the general formula (VI)) is independently an alkyl group having 1 to 3 carbon atoms or a hydrogen atom. At least one of R^{a} to R^{f} is preferably a hydrogen atom. When at least one of R^{a} to R^{f} is a hydrogen atom, synthesis of a catalyst is facilitated. Additionally, bulkiness around the silicon is reduced, and thus, a monomer to be polymerized is more easily introduced. From the similar viewpoint, it is further preferred that at least one of R^{a} to R^{c} be a hydrogen atom and at least one of R^{d} to R^{f} be a hydrogen atom. Furthermore, as the alkyl group, a methyl group is preferred.

The metallocene complex represented by the above-described general formula (VII) includes a silyl ligand [-SiX'₃]. X' contained in the silyl ligand [-SiX'₃] is a hydrogen atom, a halogen atom, a group selected from the group consisting of an alkoxy group, a thiolate group, an amide group, a silyl group, and a hydrocarbon group having 1 to 20 carbon atoms.

In the half metallocene complex represented by the above-described general formula (VIII), Cp^{R'} in the formula is substituted cyclopentadienyl, substituted indenyl, or substituted fluorenyl, and among these, Cp^{R'} is preferably substituted indenyl.

In the above-described general formula (VIII), Cp^{R'} having a substituted cyclopentadienyl ring as the basic skeleton is represented by C₅H₅₋ₓRₓ. Wherein X is an integer of 1 to 5, preferably an integer of 1 to 4. It is preferred that R independently represent a hydrocarbyl group or metalloid group. The hydrocarbyl group preferably has 1 to 20 carbon atoms, more preferably 1 to 10 carbon atoms, still more preferably 1 to 8 carbon atoms. Specific examples of the hydrocarbyl group preferably include a methyl group, an ethyl group, a tert-butyl group, a phenyl group, and a benzyl group. Meanwhile, examples of the metalloid in the metalloid group include germyl (Ge), stannyl (Sn), and silyl (Si). In addition, the metalloid group preferably has a hydrocarbyl group, and the hydrocarbyl group possessed by the metalloid group is similar to the hydrocarbyl group described above. A specific example of the metalloid group includes a trimethylsilyl group. Cp^{R'} having a substituted cyclopentadienyl ring as the basic skeleton is specifically exemplified as follows: 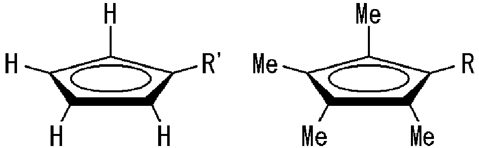 (wherein R' represents a methyl group or an ethyl group, and R represents a hydrogen atom, a methyl group, or an ethyl group).

In the above-described general formula (VIII), Cp^{R'} having the substituted indenyl ring described above as the basic skeleton is defined in the same manner as Cp^{R} in the general formulas (VI) and (VII), and preferred examples thereof are also the same.

In the above-described general formula (VIII), Cp^{R'} having the substituted fluorenyl ring described above as the basic skeleton may be represented by C₁₃H₉₋ₓRₓ or C₁₃H₁₇₋ₓRₓ. Wherein X is an integer of 1 to 9 or 1 to 17. Also, it is preferred that R independently represent a hydrocarbyl group or metalloid group. The hydrocarbyl group preferably has 1 to 20 carbon atoms, more preferably 1 to 10 carbon atoms, still more preferably 1 to 8 carbon atoms. Specific examples of the hydrocarbyl group preferably include a methyl group, an ethyl group, a tert-butyl group, a phenyl group, and a benzyl group. Meanwhile, examples of the metalloid in the metalloid group include germyl (Ge), stannyl (Sn), and silyl (Si). In addition, the metalloid group preferably has a hydrocarbyl group, and the hydrocarbyl group possessed by the metalloid group is similar to the hydrocarbyl group described above. A specific example of the metalloid group includes a trimethylsilyl group.

In the above-described general formulas (VII) and (VIII), each of X' and X is a hydrogen atom, a halogen atom, a group selected from the group consisting of an alkoxy group, a thiolate group, an amide group, a silyl group, and a hydrocarbon group having 1 to 20 carbon atoms.

In the above-described general formulas (VII) and (VIII), the halogen atom represented by X' and X may be any one of a fluorine atom, a chlorine atom, a bromine atom, and an iodine atom, with a chlorine atom and an iodine atom being preferred.

In the above-described general formulas (VII) and (VIII), examples of the alkoxy group represented by X' and X include aliphatic alkoxy groups such as a methoxy group, an ethoxy group, a propoxy group, a n-butoxy group, an isobutoxy group, a sec-butoxy group, and a tert-butoxy group; and aryloxy groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group. Among these, a 2,6-di-tert-butylphenoxy group is preferred.

In the above-described general formulas (VII) and (VIII), examples of the thiolate group represented by X' and X include aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group. Among these, a 2,4,6-triisopropylthiophenoxy group is preferred.

In the above-described general formulas (VII) and (VIII), examples of the amide group represented by X' and X include aliphatic amide groups such as a dimethyl amide group, a diethyl amide group, and a diisopropyl amide group; aryl amide groups such as a phenyl amide group, a 2,6-di-tert-butylphenyl amide group, a 2,6-diisopropylphenyl amide group, a 2,6-dineopentylphenyl amide group, a 2-tert-butyl-6-isopropyphenyl amide group, a 2-tert-butyl-6-neopentylphenyl amide group, a 2-isopropyl-6-neopentylphenyl amide group, and a 2,4,6-tri-tert-butylphenyl amide group; and a bistrialkylsilyl amide groups such as a bistrimethylsilyl amide group. Among these, a bistrimethylsilyl amide group is preferred.

In the above-described general formulas (VII) and (VIII), examples of the silyl group represented by X' and X include a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group. Among these, a tris(trimethylsilyl)silyl group is preferred.

In the above-described general formulas (VII) and (VIII), specific examples of the hydrocarbon group having 1 to 20 carbon atoms represented by X' and X include linear or branched aliphatic hydrocarbon groups such as a methyl group, an ethyl group, a n-propyl group, an isopropyl group, a n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; hydrocarbon groups each containing a silicon atom such as a trimethylsilylmethyl group and a bistrimethylsilylmethyl group. Among these, a methyl group, an ethyl group, an isobutyl group, a trimethylsilylmethyl group, and the like are preferred.

In the above-described general formulas (VII) and (VIII), as X' and X, a bistrimethylsilyl amide group or a hydrocarbon group having 1 to 20 carbon atoms is preferred.

In the above-described general formula (VIII), examples of the non-coordinating anion represented by [B]⁻ include tetravalent boron anions. Specific examples of the tetravalent boron anion include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl)phenyl]borate, and tridecahydride-7,8-dicarbaundecaborate. Among these, tetrakis(pentafluorophenyl)borate is preferred.

The metallocene complexes represented by the above-described general formula (VI) and (VII) and the half metallocene complex represented by the above-described general formula (VIII) include 0 to 3, preferably 0 or 1 neutral Lewis base L. Examples of the neutral Lewis base L include tetrahydrofuran, diethyl ether, dimethylaniline, trimethylphosphine, lithium chloride, neutral olefins, and neutral diolefins. When the complex includes a plurality of neutral Lewis bases L, the neutral Lewis bases L may be the same as or different.

The metallocene complexes represented by the above-described general formulas (VI) and (VII) and the half metallocene complex represented by the above-described general formula (VIII) may be each present as a monomer or as a dimer or a higher multimer.

As the rare earth element-containing compound (A), a compound represented by the following general formula (IX):

M-(NQ¹)(NQ²)(NQ³) (IX)

[wherein M is a lanthanoid element, scandium, or yttrium, NQ¹, NQ² and NQ³ are each an amide group and may be the same or different, provided that an M-N bond is contained], and a compound represented by the following general formula (X):

M-(NQ¹)(NQ²)(Cp^{R})··· (X)

[wherein M is a lanthanoid element, scandium, or yttrium, NQ¹ and NQ² are each an amide group and may be the same or different, provided that an M-N bond is contained, and Cp^{R} represents substituted indenyl] are also preferred.

The central metal M in the above-described general formulas (IX) and (X) is a lanthanoid element, scandium, or yttrium. The lanthanoid elements include elements of atomic numbers 57 to 71, and the central metal M may be any one of them. Preferred examples of the central metal M include samarium (Sm), neodymium (Nd), praseodymium (Pr), gadolinium (Gd), cerium (Ce), holmium (Ho), scandium (Sc), and yttrium (Y).

Examples of the amide groups represented by NQ¹, NQ² and NQ³ in the above-described general formula (IX) and by NQ¹ and NQ² in the above-described general formula (X) include aliphatic amide groups such as a dimethyl amide group, a diethyl amide group, and a diisopropyl amide group; arylamide groups such as a phenyl amide group, a 2,6-di-tert-butylphenyl amide group, a 2,6-diisopropylphenyl amide group, a 2,6-dineopentylphenyl amide group, a 2-tert-butyl-6-isopropyphenyl amide group, a 2-tert-butyl-6-neopentylphenyl amide group, a 2-isopropyl-6-neopentylphenyl amide group, and a 2,4,6-tert-butylphenyl amide group; bisdialkylsilyl amide groups such as a bisdimethylsilyl amide group; and bistrialkylsilyl amide groups such as a bistrimethylsilyl amide group, and a bisdimethylsilyl amide group and a bistrimethylsilyl amide group are preferred.

In the above-described general formula (X), Cp^{R} is substituted indenyl. Cp^{R} having an indenyl ring as the basic skeleton may be represented by C₉H₇₋ₓRₓ or C₉H₁₁₋ₓRₓ. Wherein X is the number of substituents on the substituted indenyl group, and X is an integer of 1 to 7 or 1 to 11. It is preferred that R independently represent a hydrocarbyl group or metalloid group. The hydrocarbyl group preferably has 1 to 20 carbon atoms, more preferably 1 to 10 carbon atoms, still more preferably 1 to 8 carbon atoms. Specific examples of the hydrocarbyl group preferably include a methyl group, an ethyl group, a tert-butyl group, a phenyl group, and a benzyl group. Meanwhile, examples of the metalloid in the metalloid group include germyl (Ge), stannyl (Sn), and silyl (Si). In addition, the metalloid group preferably has a hydrocarbyl group, and the hydrocarbyl group possessed by the metalloid group is similar to the hydrocarbyl group described above. Specific examples of the metalloid group include a trimethylsilyl group and a tert-butyldimethylsilyl group. Specific examples of the substituted indenyl include 2-phenyl indenyl, 2-methyl indenyl, 1-methyl-2-phenyl indenyl, 1,3-bis(tert-butyldimethylsilyl)indenyl, 1-ethyl-2-phenyl indenyl, and 1-benzyl-2-phenyl indenyl.

As the above-described rare earth element-containing compound (A), salts soluble in a hydrocarbon solvent are preferred, and specific examples of the salt include carboxylic acid salts, alkoxides, β-diketone complexes, phosphoric acid salts, and phosphorous acid salts of the above-described rare earth elements. Among these, carboxylic acid salts and phosphoric acid salts are preferred, and carboxylic acid salts are particularly preferred.

Here, examples of the hydrocarbon solvent include saturated aliphatic hydrocarbons having 4 to 10 carbon atoms such as butane, pentane, hexane, and heptane, saturated alicyclic hydrocarbons having 5 to 20 carbon atoms such as cyclopentane and cyclohexane, monoolefins such as 1-butene and 2-butene, aromatic hydrocarbons such as benzene, toluene, and xylene, and halogenated hydrocarbons such as methylene chloride, chloroform, trichloroethylene, perchloroethylene, 1,2-dichloroethane, chlorobenzene, bromobenzene, and chlorotoluene.

Examples of the carboxylic acid salt of the above-described rare earth element include compounds represented by the following general formula (XI):

(R²⁹-COO)₃M (XI)

[wherein R²⁹ is a hydrocarbon group having 1 to 20 carbon atoms, and M is a rare earth element of atomic numbers 57 to 71 of the periodic table]. Wherein R²⁹ may be saturated or unsaturated, is preferably an alkyl group or an alkenyl group, and may be any of linear, branched, and cyclic. The carboxyl group is bonded to a primary, secondary or tertiary carbon atom. Specific examples of the carboxylic acid salt include salts of octanoic acid, 2-ethylhexanoic acid, oleic acid, neodecanoic acid, stearic acid, benzoic acid, naphthenic acid, and versatic acid [trade name of Shell Chemical Co., Ltd., carboxylic acid in which carboxyl group is bonded to a tertiary carbon atom]. Among these, salts of 2-ethylhexanoic acid, neodecanoic acid, naphthenic acid, and versatic acid are preferred.

Examples of the alkoxide of the above-described rare earth element include compounds represented by the following general formula (XII):

(R³⁰O)₃M (XII)

[wherein R³⁰ is a hydrocarbon group having 1 to 20 carbon atoms, and M is a rare earth element of atomic numbers 57 to 71 of the periodic table]. Examples of the alkoxy group represented by R³⁰O include a 2-ethyl-hexylalkoxy group, an oleylalkoxy group, a stearylalkoxy group, a phenoxy group, and a benzylalkoxy group. Among these, a 2-ethyl-hexylalkoxy group and a benzylalkoxy group are preferred.

Examples of the β-diketone complex of the above-described rare earth element include an acetylacetone complex, benzoylacetone complex, propionitrileacetone complex, valerylacetone complex, and ethylacetylacetone complex of the above-described rare earth element. Among these, an acetylacetone complex and ethylacetylacetone complex are preferred.

Examples of the phosphoric acid salts and phosphorous acid salts of the above-described rare earth element include salts of the above-described rare earth element with bis(2-ethylhexyl) phosphate, bis(1-methylheptyl) phosphate, bis(p-nonylphenyl) phosphate, bis(polyethylene glycol-p-nonylphenyl) phosphate, (1-methylheptyl)(2-ethylhexyl) phosphate, (2-ethylhexyl)(p-nonylphenyl) phosphate, mono-2-ethylhexyl 2-ethylhexylphosphonate, mono-p-nonylphenyl 2-ethylhexylphosphonate, bis(2-ethylhexyl)phosphinic acid, bis(1-methylheptyl)phosphinic acid, bis(p-nonylphenyl)phosphinic acid, (1-methylheptyl)(2-ethylhexyl)phosphinic acid, or (2-ethylhexyl)(p-nonylphenyl)phosphinic acid. Among these, preferred are salts of the above-described rare earth element with bis(2-ethylhexyl) phosphate, bis(1-methylheptyl) phosphate, mono-2-ethylhexyl 2-ethylhexylphosphonate, and bis(2-ethylhexyl)phosphinic acid.

When a conjugated diene compound is polymerized in the presence of the catalyst composition of the present disclosure, the molar amount of the rare earth element-containing compound (A) is preferably 1/1000 or less, further preferably 1/2000 or less the molar amount of the conjugated diene compound to be used. When the molar ratio is specified as above, it is possible to markedly reduce the amount of the catalyst residue in the modified conjugated diene-based polymer to be obtained. Thus, compounding the polymer into the rubber composition enables the fracture characteristics of the rubber composition to be further improved.

Note that the concentration of the rare earth element-containing compound (A) in the catalyst composition is preferably in the range of 0.0001 to 0.2 mol/L in the polymerization reaction system.

The organic metal compound (B) for use in the catalyst composition of the present disclosure is represented by the following general formula (I):

YR¹ₐR²_{b}R³_{c} (I)

[wherein Y is a metal selected from Group 1, Group 2, Group 12, and Group 13 of the periodic table, R¹ and R² are each a hydrocarbon group having 1 to 10 carbon atoms or a hydrogen atom, and R³ is a hydrocarbon group having 1 to 10 carbon atoms, provided that R¹, R², and R³ may be the same as or different from one another, a is 1 and b and c are 0 when Y is a metal selected from Group 1 of the periodic table, a and b are 1 and c is 0 when Y is a metal selected from Group 2 and Group 12 of the periodic table, and a, b, and c are all 1 when Y is a metal selected from Group 13 of the periodic table].

In the above-described general formula (I), specific examples of the hydrocarbon group having 1 to 10 carbon atoms represented by R¹, R², and R³ include linear or branched aliphatic hydrocarbon groups such as a methyl group, an ethyl group, a n-propyl group, an isopropyl group, a n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group. Among these, a methyl group, an ethyl group, an isobutyl group, and the like are preferred.

As the organic metal compound (B), an organic aluminum compound represented by the following general formula (XIII) are preferred:

AlR¹R²R³ (XIII)

[wherein R¹ and R² are each a hydrocarbon group having 1 to 10 carbon atoms or hydrogen atom, R³ is a hydrocarbon group having 1 to 10 carbon atoms, provided that R¹, R, and R³ may be the same as or different from one another]. The organic aluminum compound corresponds to a compound wherein Y is Al and a, b, and c are each 1 in the above-described general formula (I).

Examples of the organic aluminum compound of the above-described general formula (XIII) include trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, trioctyl aluminum; diethyl aluminum hydride, di-n-propyl aluminum hydride, di-n-butylaluminum hydride, diisobutylaluminum hydride, dihexyl aluminum hydride, diisohexyl aluminum hydride, dioctyl aluminum hydride, diisooctyl aluminum hydride; ethyl aluminum dihydride, n-propyl aluminum dihydride, and isobutyl aluminum dihydride. Among these, triethyl aluminum, triisobutyl aluminum, diethyl aluminum hydride, and diisobutylaluminum hydride are preferred.

One of the organic metal compounds (B) can be used singly or two or more thereof can be used in admixture.

The content of the organic metal compound (B) is preferably 2 fold moles or more, more preferably 3 to 1000 fold moles, still more preferably 30 to 900 fold moles, particularly preferably 50 to 800 fold moles, with respect to the above-described rare earth element-containing compound (A).

The catalyst composition of the present disclosure contains a compound having a polar functional group (C). When a conjugated diene compound is polymerized in the presence of the catalyst composition of the present disclosure, the polar functional group of the compound (C) is a functional group having a higher polarity than that of the conjugated diene compound to be used as a monomer, and preferably has at least one selected from the group consisting of oxygen, nitrogen, sulfur, silicon, and phosphorus. When the polar functional group has at least one selected from the group consisting of oxygen, nitrogen, sulfur, silicon, and phosphorus, the affinity of a modified conjugated diene-based polymer to be formed for a filler is further improved.

The polar functional group of the compound having a polar functional group (C) preferably has at least one selected from the group consisting of an alcoholic hydroxyl group, an alkoxy group, and a substituted or unsubstituted amino group. When the polar functional group of the compound having a polar functional group (C) is an alcoholic hydroxyl group, an alkoxy group, or a substituted or unsubstituted amino group, the affinity of a modified conjugated diene-based polymer to be formed for a filler is further improved. Examples of the alcoholic hydroxyl group include hydroxyalkyl groups such as a hydroxymethyl group, a hydroxyethyl group, and a 2,2-dihydroxymethylpropyl group, besides the hydroxyl group. The number of carbon atoms from the main chain to the hydroxy group or the amino group is not particularly limited. Additionally, the hydroxy group and the amino group may be each protected with a protective group. As the protective group, for example, a trimethylsilyl group, a triethylsilyl group, a triisopropyl group, a tert-butyldimethylsilyl group, a tert-butyldiphenylsilyl group, a benzyl group, a tert-butoxycarbonyl group, or a benzyl oxycarbonyl group can be used, and a silicon-based protective group is particularly desired. Examples of the alkoxy group include aliphatic alkoxy groups such as a methoxy group, an ethoxy group, a propoxy group, a n-butoxy group, an isobutoxy group, a sec-butoxy group, and a tert-butoxy group; and aryloxy groups such as a phenoxy group, a 2,6-di-tert-butylphenoxy group, a 2,6-diisopropylphenoxy group, a 2,6-dineopentylphenoxy group, 2-tert-butyl-6-isopropylphenoxy group, a 2-tert-butyl-6-neopentylphenoxy group, and 2-isopropyl-6-neopentylphenoxy group. Examples of the substituent for the amino group in the substituted amino group include alkyl groups such as a methyl group and an ethyl group and trialkylsilyl groups such as a trimethylsilyl group (TMS). Note that examples of the substituted or unsubstituted amino group include a methylamino group, an ethylamino group, a trimethylsilylamino group, a dimethylamino group, a methylethylamino group, a diethylamino group, and a bis(trimethylsilyl)amino group, besides the amino group.

The compound having a polar functional group (C) preferably has a carbon-carbon unsaturated bond in the molecule, in addition to the polar functional group. When the compound having a polar functional group (C) has a carbon-carbon unsaturated bond in the molecule, in addition to the polar functional group, the compound (C) is more likely to be incorporated into the main chain of a modified conjugated diene-based polymer to be formed, as a monomer, by use of the carbon-carbon unsaturated bond. Note that the carbon-carbon unsaturated bond may be a carbon-carbon double bond or carbon-carbon triple bond.

The compound having a polar functional group (C) is preferably an aromatic compound having a carbon-carbon unsaturated bond in the molecule. Note that the carbon-carbon unsaturated bond here excludes aromatic unsaturated bonds. When the compound having a polar functional group (C) is an aromatic compound having a carbon-carbon unsaturated bond in the molecule, the compound (C) is further more likely to be incorporated into the main chain of a modified conjugated diene-based polymer to be formed, by use of the carbon-carbon unsaturated bond.

The compound having a polar functional group (C) is preferably a styrene derivative. Styrene derivatives herein refer to compounds obtained by replacing a hydrogen in a styrene molecule with a monovalent substituent, including both compounds obtained by replacing a hydrogen in the benzene ring of the styrene molecule and compounds obtained by replacing a hydrogen of the vinyl group in the styrene molecule. Compounds obtained by replacing the hydrogen in the benzene ring of the styrene molecule are preferred, and ones having a substituent at the para-position with respect to the vinyl group are further preferred. Note that examples of the monovalent substituent include a hydroxyalkyl group, a trialkylsilyloxyalkyl group, and an aminoalkyl group. Here, examples of the hydroxyalkyl group include a hydroxymethyl group, a hydroxyethyl group, and a 2,2-dihydroxymethylpropyl group. The number of carbon atoms from the main chain to the hydroxy group or the amino group is not particularly limited. Additionally, the hydroxy group and the amino group may be each protected with a protective group. As the protective group, for example, a trimethylsilyl group, a triethylsilyl group, a triisopropyl group, a tert-butyldimethylsilyl group, a tert-butyldiphenylsilyl group, a benzyl group, a tert-butoxycarbonyl group, or a benzyl oxycarbonyl group can be used, and a silicon-based protective group is particularly desired. Examples of the trialkylsilyloxyalkyl group include a trimethylsilyloxymethyl group, a trimethylsilyloxyethyl group, and a triethylsilyloxymethyl group. Examples of the aminoalkyl group include an aminomethyl group, an aminoethyl group, and an aminopropyl group.

Specific examples of the compound having a polar functional group (C) include unsaturated alcohols such as allyl alcohol, 3-hydroxy-1-pentene, 4-hydroxy-1-pentene, 5-hydroxy-1-pentene, and propargyl alcohol, unsaturated ethers such as propargyltrimethylsilyl ether, 4-ethynylbenzyltrimethylsilyl ether, and 4-vinylbenzyltrimethylsilyl ether, styrene derivatives such as p-hydroxymethylstyrene, p-trimethylsilyloxymethylstyrene, p-(2,2-dihydroxymethyl)propylstyrene, and p-aminomethylstyrene, and amine compounds such as allylamine, butenylamine, pentenylamine, hexenylamine, N,N-bis(trimethylsilyl)allylamine, and p-aminomethyl styrene.

Only one of the compounds having a polar functional group (C) can be used singly or two or more thereof can be used in admixture.

The molar amount of the compound having a polar functional group (C) is preferably 2 times or more, more preferably 3 times or more, and preferably 4 times or less the molar amount of the organic metal compound (B). When the molar amount of the compound having a polar functional group (C) is 3 times or more the molar amount of the organic metal compound (B), the compound having a polar functional group (C) is more likely to be incorporated into the main chain of a modified conjugated diene-based polymer to be formed.

The molar amount of the compound having a polar functional group (C) is preferably 30 times or more, more preferably 30 to 1000 times, further preferably 30 to 800 times the molar amount of the rare earth element-containing compound (A). When the molar amount of the compound having a polar functional group (C) is 30 times or more the molar ratio of the rare earth element-containing compound (A), the compound having a polar functional group (C) is more likely to be incorporated into the main chain of a modified conjugated diene-based polymer to be formed.

The catalyst composition of the present disclosure preferably further comprises at least one compound selected from the group consisting of an ionic compound (D) and a halogen compound (E). When the catalyst composition contains the ionic compound (D) and the halogen compound (E), the compound having a polar functional group (C) is more likely to be incorporated into the main chain of a modified conjugated diene-based polymer to be formed. Note that, from the viewpoint of consideration of environment, the catalyst composition of the present disclosure preferably contains the ionic compound (D), rather than the halogen compound (E).

The ionic compound (D) that can be used in the catalyst composition is composed of a non-coordinating anion and a cation. Examples of the ionic compound (D) include ionic compounds capable of reacting with the aforementioned rare earth element-containing compound (A) to form a cationic transition metal compound.

Here, examples of the non-coordinating anion include tetravalent boron anions, such as tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenylpentafluorophenyl)borate, [tris(pentafluorophenyl)phenyl]borate, and tridecahydride-7,8-dicarbaundecaborate. Among these, tetrakis(pentafluorophenyl)borate is preferred.

Meanwhile, examples of the cation include a carbonium cation, an oxonium cation, an ammonium cation, a phosphonium cation, a cycloheptatrienyl cation, and a ferrocenium cation containing a transition metal. Specific examples of the carbonium cation include trisubstituted carbonium cations such as a triphenylcarbonium cation and a tri(substituted phenyl)carbonium cation. More specific examples of the tri(substituted phenyl)carbonium cation include a tri(methylphenyl)carbonium cation and a tri(dimethylphenyl)carbonium cation. Specific examples of the ammonium cation include trialkylammonium cations such as a trimethylammonium cation, a triethylammonium cation, a tripropylammonium cation, and a tributylammonium cation (e.g., a tri(n-butyl)ammonium cation); N,N-dialkylanilinium cations such as a N,N-dimethylanilinium cation, a N,N-diethylanilinium cation, and a N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation.

Thus, as the ionic compound (D), compounds obtained by combining one selected from the aforementioned non-coordinating anions and one selected from the cations are preferred. Specifically, N,N-dimethylanilinium tetrakis(pentafluorophenyl)borate, triphenylcarbonium tetrakis(pentafluorophenyl)borate, and the like are preferred.

One of the ionic compounds (D) can be used singly or two or more thereof can be used in admixture.

The content of the ionic compound (D) in the catalyst composition is preferably 0.1 to 10 fold moles, further preferably about 1 fold mole, with respect to the aforementioned rare earth element-containing compound (A).

Examples of the halogen compound (E) that can be used in the catalyst composition include Lewis acids, complex compounds of a metal halide and a Lewis base, and organic compounds containing an active halogen. The halogen compound (E) can react with, for example, the aforementioned rare earth element-containing compound (A) to thereby form a cationic transition metal compound, a halogenated transition metal compound, or a compound with a charge-deficient transition metal center. Particularly, in consideration of the stability in the air, a complex compound of a metal halide and a Lewis base, rather than a Lewis acid, is preferably used as the halogen compound (E). As the halogen compound (E), a compound containing 2 or more halogen atoms therein is preferred because the compound is more reactive than a compound containing only one halogen atom, and thus the amount of the compound to be used can be reduced.

As the above-described Lewis acid, it is possible to use boron-containing halogen compounds such as B(C₆F₅)₃, aluminum-containing halogen compounds such as Al(C₆F₅)₃, and additionally halogen compounds containing an element belonging to Groups 4, 6, 13, 14, or 15 of the periodic table. A preferable example thereof is an aluminum halide or organometallic halide. In addition, as the halogen element, chlorine or bromine is preferable.

Specific examples of the above-described Lewis acid include methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, dibutyltin dichloride, aluminum tribromide, antimony trichloride, antimony pentachloride, phosphorus trichloride, phosphorus pentachloride, tin tetrachloride, titanium tetrachloride, and tungsten hexachloride. Among these, diethyl aluminum chloride, ethyl aluminum sesquichloride, ethyl aluminum dichloride, diethyl aluminum bromide, ethyl aluminum sesquibromide, and ethyl aluminum dibromide are particularly preferred.

Examples of the metal halide constituting the complex compound of the above-described metal halide and Lewis base include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, and gold bromide. Among these, magnesium chloride, calcium chloride, barium chloride, manganese chloride, zinc chloride, and copper chloride are preferred, and magnesium chloride, manganese chloride, zinc chloride, and copper chloride are particularly preferred.

As the Lewis base constituting the complex compound of the above-described metal halide and Lewis base, phosphorus compounds, carbonyl compounds, nitrogen compounds, ether compounds, and alcohols are preferred. Specific examples thereof include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. Among these, tri-2-ethylhexyl phosphate, tricresyl phosphate, acetylacetone, 2-ethylhexanoic acid, versatic acid, 2-ethylhexyl alcohol, 1-decanol, and lauryl alcohol are preferred.

The above-described Lewis base is allowed to react at a ratio of 0.01 to 30 mol, preferably 0.5 to 10 mol with respect to 1 mol of the above-described metal halide. It is possible to reduce the metal remained in the polymer by using the reaction product with the Lewis base.

Examples of the organic compound containing the above-described active halogen include benzyl chloride.

One of the halogen compounds (E) can be used singly or two or more thereof can be used in admixture.

The content of the halogen compound (E) in the catalyst composition is preferably 0 to 5 fold moles, further preferably 1 to 5 fold moles, with respect to the rare earth element-containing compound (A).

The catalyst composition of the present disclosure preferably further contains at least one of substituted or unsubstituted indene (F), that is indene and substituted indene compounds. When the catalyst composition contains the substituted or unsubstituted indene (F), it is possible to improve the catalytic activity and to shorten the reaction time.

The indene and substituted indene compounds each has an indenyl group. Here, examples of the substituted indene compound include 2-phenyl-1H-indene, 3-benzyl-1H-indene, 3-methyl-2-phenyl-1H-indene, 3-benzyl-2-phenyl-1H-indene, and 1-benzyl-1H-indene. Among these, 3-benzyl-1H-indene and 1-benzyl-1H-indene are preferred.

The amount of the substituted or unsubstituted indene (F) to be used is preferably more than 0, further preferably 0.5 mol or more, particularly preferably 1 mol or more based on 1 mol of the aforementioned rare earth element-containing compound (A), from the viewpoint of improving the catalytic activity, and preferably 3 mol or less, further preferably 2.5 mol or less, particularly preferably 2.2 mol or less based on 1 mol of the rare earth element-containing compound (A), from the viewpoint of preventing reduction of the catalytic activity.

### <Method for producing modified conjugated diene-based polymer>

The method for producing a modified conjugated diene-based polymer of the present disclosure is characterized by comprising a step of polymerizing a conjugated diene compound in the presence of the above-described catalyst composition (hereinbelow, the step may be referred to as the "polymerization step"). In the method for producing a modified conjugated diene-based polymer of the present disclosure, a modified conjugated diene-based polymer of which main chain is modified can be easily produced by polymerizing a conjugated diene compound in the presence of the aforementioned catalyst composition.

Note that, when two or more conjugated diene compounds are used or when a monomer copolymerizable with the conjugated diene compound is used in combination, the polymerization will be copolymerization. In the present disclosure, the polymerization also incorporates copolymerization.

The method for producing a modified conjugated diene-based polymer of the present disclosure may appropriately include further a cleaning step, a modifying step, and other steps as required, in addition to the polymerization step.

In the polymerization step, the conjugated diene compound to be used as the monomer has preferably 4 to 8 carbon atoms, without particular limitation. Specific examples of the conjugated diene compound include 1,3-butadiene, isoprene, 1,3-pentadiene, and 2,3-dimethylbutadiene. Among these, 1,3-butadiene and isoprene are preferred.

In the polymerization step, as a monomer, in addition to the conjugated diene compound, a monomer copolymerizable with the conjugated diene compound may be used in combination. As the monomer copolymerizable with the conjugated diene compound, an aromatic vinyl compound is preferred. The aromatic vinyl compound preferably has 8 to 10 carbon atoms, without particular limitation. Examples of the aromatic vinyl compound include styrene, α-methylstyrene, o-methylstyrene, m-methylstyrene, p-methylstyrene, o,p-dimethylstyrene, o-ethylstyrene, m-ethylstyrene, and p-ethylstyrene. As the aromatic vinyl compound, the aromatic vinyl compounds mentioned above can be used without particular limitation. Among these, styrene is particularly preferred.

For the polymerization step, any method can be used, including solution polymerization, suspension polymerization, liquid phase bulk polymerization, emulsion polymerization, gas phase polymerization, solid phase polymerization, and the like. In addition, in the case of using a solvent for the reaction, such a solvent is only required to be inert in the polymerization reaction. Example of the solvent include toluene and hexane (e.g., cyclohexane and n-hexane).

In the method for producing a modified conjugated diene-based polymer of the present disclosure, the polymerization step may be performed in one stage or may be performed in two or more multiple stages. The one-stage polymerization step is a step of polymerizing all the monomers to be polymerized at a time. The multiple-stage polymerization step is a step of first reacting a part or all of one or two or more types of monomers to form a polymer (first polymerization stage), and then adding thereto a remaining type of monomer and a remaining part of the one or two or more types of monomers and polymerizing them in one or more stages (second polymerization stage to final polymerization stage).

In the presence of the above-described catalyst composition, the bond content in the total units derived from the conjugated diene compound in the polymer produced (cis-1,4 bond content, trans-1,4 bond content, 3,4-vinyl bond content, and 1,2-vinyl bond content) and the content of the unit derived from each monomer (i.e., copolymerization ratio of each monomer) can be controlled by controlling the order in which the monomers are loaded into the reactor, the amount of each monomer to be loaded, and other reaction conditions.

In the production method of the present disclosure, the polymerization step is preferably performed in an atmosphere of an inert gas, preferably a nitrogen gas or argon gas. The temperature for the polymerization step is not particularly limited, but is, for example, preferably within a range of -100 to 200°C, and may be room temperature or so. Note that, when the polymerization temperature is elevated, the cis-1,4-selectivity of the conjugated diene of the polymer may lower. The pressure in the polymerization step is preferably in the range of 0.1 to 10.0 MPa. The reaction time for the polymerization step is not particularly limited, but, for example is in the range of 1 second to 10 days. The reaction time can be appropriately selected depending on conditions such as the desired microstructure of a polymer to be obtained, the type, amount to be loaded, and order of addition of each monomer, the type of catalyst, and the reaction temperature. In the polymerization step, a polymerization terminator such as methanol, ethanol, and isopropanol may be used to terminate the polymerization.

The cleaning step is a step for cleaning the polymer obtained in the polymerization step. Note that the solvent for use in the cleaning is not particularly limited and may be selected as appropriate depending on the purpose. Examples of the solvent include methanol, ethanol, and isopropanol. When a catalyst derived from a Lewis acid is used as the catalyst composition, an acid (e.g., hydrochloric acid, sulfuric acid, or nitric acid) may be added to these solvents for use. The amount of the acid to be added is preferably 15 mol% or less with respect to the solvent. When the amount thereof is more than 15 mol%, the acid may remain in the polymer, potentially causing adverse effects on the reaction during kneading and vulcanization. The cleaning step enables the amount of the catalyst residue in the polymer to be suitably reduced.

The method for producing a modified conjugated diene-based polymer of the present disclosure preferably comprises a step of reacting at least one compound selected from the group consisting of the following component (a) to component (h) with the polymerization product obtained in the step of polymerizing the conjugated diene compound (hereinbelow, the step may be referred to as the "modification step").

It is possible to easily produce a modified conjugated diene-based polymer of which main chain is modified and additionally of which terminals are modified, by polymerizing the conjugated diene compound in the presence of the aforementioned catalyst composition and then, reacting at least one compound selected from the group consisting of the component (a) to component (h) with the polymerization product.

The component (a) that can be used in the modification step is a compound represented by the above-described general formula (II).

In the above-described general formula (II), X¹ to X⁵ represent a hydrogen atom, a halogen atom, or monovalent functional group including at least one selected from a carbonyl group, a thiocarbonyl group, an isocyanate group, a thioisocyanate group, an epoxy group, a thioepoxy group, a halogenated silyl group, a hydrocarbyloxysilyl group, and a sulfonyloxy group and excluding an active proton and an onium salt. X¹ to X⁵ may be the same or different from each other provided that at least one of them is not a hydrogen atom.

In the above-described general formula (II), R⁴ to R⁸ each independently represent a single bond or a divalent hydrocarbon group having 1 to 18 carbon atoms. Here, examples of the divalent hydrocarbon group include alkylene groups having 1 to 18 carbon atoms, alkylene groups having 2 to 18 carbon atoms, arylene groups having 6 to 18 carbon atoms, and aralkylene groups having 7 to 18 carbon atoms. Among these, preferred are alkylene groups having 1 to 18 carbon atoms, particularly alkylene groups having 1 to 10 carbon atoms. The alkylene group may be linear, branched, or cyclic and is preferably linear. Examples of the linear alkylene group include a methylene group, an ethylene group, a trimethylene group, a tetramethylene group, a pentamethylene group, hexamethylene group, an octamethylene group, and a decamethylene group.

Alternatively, in the above-described general formula (II), a plurality of aziridine rings may be linked via any of X¹ to X⁵ and R⁴ to R⁸.

The component (b) that can be used in the modification step is a halogenated organic metal compound, a metal halide compound, or an organic metal compound represented by R⁹ₙM¹Z₄₋ₙ, M¹Z₄, M¹Z₃, R¹⁰ₙM¹(-R¹¹-COOR¹²)₄₋ₙ, or R¹⁰ₙM¹(-R¹¹-COR¹²)₄₋ₙ. Wherein R⁹ to R¹¹ are the same or different and are each a hydrocarbon group having 1 to 20 carbon atoms, and R¹² is a hydrocarbon group having 1 to 20 carbon atoms and optionally contains a carbonyl or ester group on a side chain. Additionally, M¹ is a tin atom, a silicon atom, a germanium atom, or a phosphorus atom, Z is a halogen atom, and n is an integer of 0 to 3. Note that specific examples of the hydrocarbon group having 1 to 20 carbon atoms include linear or branched aliphatic hydrocarbon groups such as a methyl group, an ethyl group, a n-propyl group, an isopropyl group, a n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; and aralkyl groups such as a benzyl group.

The component (c) that can be used in the modification step is a heterocumulene compound containing a Y¹=C=Y² bond in the molecule. Wherein Y¹ is a carbon atom, an oxygen atom, a nitrogen atom, or a sulfur atom, and Y² is an oxygen atom, a nitrogen atom, or a sulfur atom. Among the components (c), when Y¹ is a carbon atom and Y² is an oxygen atom, the component is a ketene compound. When Y¹ is a carbon atom and Y² is a sulfur atom, the component is a thioketene compound. When Y¹ is a nitrogen atom and Y² is an oxygen atom, the component is an isocyanate compound. When Y¹ is a nitrogen atom and Y² is a sulfur atom, the component is a thioisocyanate compound. When both Y¹ and Y² are nitrogen atoms, the component is a carbodiimide compound. When both Y¹ and Y' are oxygen atoms, the component is carbon dioxide. When Y¹ is an oxygen atom and Y² is a sulfur atom, the component is carbonyl sulfide. When both Y¹ and Y² are sulfur atoms, the component is carbon disulfide. Among these, as the component (c), carbon dioxide is preferred.

The component (d) that can be used in the modification step is a heterotricyclic compound having a structure represented by the above-described general formula (III) in the molecule. In the general formula (III), Y³ is an oxygen atom or a sulfur atom. Among the components (d), when Y³ is an oxygen atom, the component is an epoxy compound. When Y³ is a sulfur atom, the component is a thiirane compound. Here, examples of the epoxy compound include ethylene oxide, propylene oxide, cyclohexene oxide, styrene oxide, epoxidized soybean oil, and epoxidized natural rubber. Additionally, examples of the thiirane compound include thiirane, methylthiirane, and phenylthiirane.

The component (e) that can be used in the modification is a halogenated isocyano compound. The halogenated isocyano compound has a bond represented by >N=C-Z, wherein Z is a halogen atom. Examples of the halogenated isocyano compound include 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino-4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichloro-2-(methylthio)pyrimidine, 2,4,5,6-tetrachloropyrimidine, 2,4,6-trichloropyrimidine, 2-amino-6-chloropyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole, and 2-chlorobenzoxazole.

The component (f) that can be used in the modification step is a carboxylic acid, acid halide, ester compound, carbonic ester compound, or acid anhydride represented by R¹³-(COOH)ₘ, R¹⁴(COZ)ₘ, R¹⁵-(COO-R¹⁶), R¹⁷-OCOO-R¹⁸, R¹⁹-(COOCO-R²⁰)ₘ, or the above-described general formula (IV). Wherein R¹³ to R²¹ are the same or different and are each a hydrocarbon group having 1 to 50 carbon atoms, Z is a halogen atom, and m is an integer of 1 to 5. Note that specific examples of the hydrocarbon group having 1 to 50 carbon atoms include linear or branched aliphatic hydrocarbon groups such as a methyl group, an ethyl group, a n-propyl group, an isopropyl group, a n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; and aralkyl groups such as a benzyl group.

The component (g) that can be used in the modification step is a carboxylic acid metal salt represented by R²²ₖM²(OCOR²³)₄₋ₖ, R²⁴ₖM²(OCO-R²⁵-COOR²⁶)₄₋ₖ, or the above-described general formula (V). Wherein R²² to R²⁸ are the same or different and are each a hydrocarbon group having 1 to 20 carbon atoms, M² is a tin atom, a silicon atom, or a germanium atom, k is an integer of 0 to 3, and p is an integer of 0 to 1. Note that specific examples of the hydrocarbon group having 1 to 20 carbon atoms include linear or branched aliphatic hydrocarbon groups such as a methyl group, an ethyl group, a n-propyl group, an isopropyl group, a n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; and aralkyl groups such as a benzyl group.

The component (h) that can be used in the modification step is an N-substituted aminoketone, N-substituted aminothioketone, N-substituted aminoaldehyde, N-substituted aminothioaldehyde, or compound having a -C-(=Y³)-N< bond (wherein Y³ represents an oxygen atom or a sulfur atom). Examples of the component (h) include 4-dimethylaminoacetophenone, 4-diethylaminoacetophenone, 1,3-bis(diphenylamino)-2-propanone, 1,7-bis(methylethylamino)-4-heptanone, 4-dimethylaminobenzophenone, 4-di-t-butyl aminobenzophenone, 4-diphenylaminobenzophenone, 4,4'-bis(dimethylamino)benzophenone, 4,4'-bis(diethylamino)benzophenone, 4,4'-bis(diphenylamino)benzophenone, 4-dimethylaminobenzaldehyde, 4-diphenylaminobenzaldehyde, 4-divinylaminobenzaldehyde, N-methyl-β-propiolactam, N-phenyl-β-propiolactam, N-methyl-2-pyrrolidone, N-phenyl-2-pyrrolidone, N-t-butyl -2-pyrrolidone, N-phenyl-5-methyl-2-pyrrolidone, N-methyl-2-piperidone, N-phenyl-2-piperidone, N-methyl-ε-caprolactam, N-phenyl-ε-caprolactam, N-methyl-ω-caprolactam, N-phenyl-ω-caprolactam, N-methyl-ω-laurylolactam, N-vinyl-ω-laurylolactam, 1,3-dimethylethyleneurea, 1,3-divinylethyleneurea, 1,3-diethyl-2-imidazolidinone, 1-methyl-3-ethyl-2-imidazolidinone, and 1,3-dimethyl-2-imidazolidinone.

The amount of the compound selected from the component (a) to component (h) to be used (total amount) in a molar ratio is 0.1 to 100, preferably 1.0 to 50 with respect to the rare earth element-containing compound (A) contained in the catalyst composition. When the amount of the compound selected from the component (a) to component (h) to be used is within this range, the modification reaction readily proceeds, and thus, it is possible to readily produce a modified conjugated diene-based polymer of which terminals are modified.

Additionally, the modification step is preferably performed usually at room temperature to 100°C, under stirring, for 0.5 minutes to 2 hours, preferably 3 minutes to 1 hour.

### <Modified conjugated diene-based polymer>

The modified conjugated diene-based polymer of the present disclosure is characterized by having been produced by the production method described above. At least a portion of the aforementioned compound having a polar functional group (C) is incorporated into the main chain of the modified conjugated diene-based polymer of the present disclosure. The compound (C) has the polar functional group, and thus, the modified conjugated diene-based polymer of the present disclosure will have the polar functional group. Then, since the polar functional group has an affinity for the filler, the modified conjugated diene-based polymer of the present disclosure has a high affinity for the filler. For example, when the modified conjugated diene-based polymer is compounded in the rubber composition, the dispersibility of the filler in the rubber composition is improved, and thus, it is possible to obtain a rubber composition excellent in low loss property, fracture characteristics, wear resistance.

In the modified conjugated diene-based polymer of the present disclosure, the modification ratio is preferably 30% or more, further preferably 40% or more, still further preferably 50% or more. Note that, in the present disclosure, the modification ratio is measured by a method described in the examples below. Specifically, when the compound having a polar functional group (C) contains nitrogen, the modification ratio is determined from the total nitrogen content of the polymer, and in other cases, the modification ratio is determined from NMR. With the modification ratio of the modified conjugated diene-based polymer of 30% or more, when the polymer is compounded in the rubber composition, it is possible to further improve the low loss property, fracture characteristics, and wear resistance of the rubber composition.

In the case where isoprene is used as the conjugated diene compound, the modified conjugated diene-based polymer of the present disclosure will be modified polyisoprene. Here, the modified polyisoprene has a gel content of preferably 30% or more, further preferably 40% or more. Note that, in the present disclosure, the gel content is measured by a method described in the examples below. When the gel content of the modified polyisoprene is 30% or more, the amount of entangled molecular chains is large, and thus, the fracture characteristics of the modified polyisoprene is improved.

Note that, examples of the modified conjugated diene-based polymer of the present disclosure include modified polybutadiene, modified polypentadiene, and modified polydimethylbutadiene, in addition to the aforementioned modified polyisoprene. Among these, modified polyisoprene and modified polybutadiene are preferred.

### <Rubber composition>

The rubber composition of the present disclosure is characterized by comprising the modified conjugated diene-based polymer described above. The rubber composition of the present disclosure is excellent in low loss property, fracture characteristics (such as crack resistance), and wear resistance.

The rubber composition of the present disclosure contains the aforementioned modified conjugated diene-based polymer as the rubber component and can further contain other rubber components, a filler, a crosslinking agent, and other components, as required.

Note that, in the rubber composition of the present disclosure, 30% by mass or more of the rubber component is preferably composed of the above-described modified conjugated diene-based polymer. When 30% by mass or more of the rubber component is composed of the above-described modified conjugated diene-based polymer, it is possible to further improve the low loss property, fracture characteristics, and wear resistance of the rubber composition.

Note that other rubber component is not particularly limited and can be appropriately selected depending on the purpose. Examples thereof include natural rubber (NR), isoprene rubber (IR), butadiene rubber (BR), acrylonitrile-butadiene rubber (NBR), chloroprene rubber, ethylene-propylene rubber (EPM), ethylene-propylene-non-conjugated diene rubber (EPDM), polysulfide rubber, silicone rubber, fluororubber, and urethane rubber. One of these may be used singly or two or more of these may be used in admixture.

When the rubber composition contains a filler, it is possible to improve the reinforcement performance of the rubber composition. Examples of the filler include, without particular limitation, carbon black, silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate. Among these, carbon black is preferably used. One of these may be used singly or two or more of these may be used in combination.

The amount of the filler to be compounded is not particularly limited and can be appropriately selected depending on the purpose. The amount is preferably 10 to 100 parts by mass, more preferably 20 to 80 parts by mass, particularly preferably 30 to 60 parts by mass based on 100 parts by mass of the rubber component. When the amount of the filler to be compounded is 10 parts by mass or more, an effect of improving the reinforcement performance due to compounding of the filler can be obtained. When the amount is 100 parts by mass or less, it is possible to retain good operability.

The crosslinking agent is not particularly limited and can be appropriately selected depending on the purpose. Examples thereof include sulfur-containing crosslinking agents, organic peroxide-containing crosslinking agents, inorganic crosslinking agents, polyamine crosslinking agents, resin crosslinking agents, sulfur compound-based crosslinking agents, and oxime-nitrosamine-based crosslinking agents. Note that, as a rubber composition for tires, sulfur-containing crosslinking agents (vulcanizing agents) are more preferred, among these.

The content of the crosslinking agent is not particularly limited and can be appropriately selected depending on the purpose. The content is preferably 0.1 to 20 parts by mass based on the 100 parts by mass of the rubber component.

When the vulcanizing agent is used, a vulcanization accelerator may be further used in combination. Examples of the vulcanization accelerator include guanidine-based, aldehyde-amine-based, aldehyde-ammonia-based, thiazole-based, sulfenamide-based, thiourea-based, thiuram-based, dithiocarbamate-based, and xanthate-based compounds.

Additionally, for the rubber composition of the present disclosure, known softeners, vulcanizing co-agents, colorants, flame retardants, lubricants, foaming agents, plasticizers, processing aids, antioxidants, age resistors, anti-scorch agents, ultraviolet rays protecting agents, antistatic agents, color protecting agents, and other compounding agents can be used depending on the intended purpose.

The rubber composition of the present disclosure can be used in anti-vibration rubber, seismic isolation rubber, belts such as conveyor belts, rubber crawler, various hoses, and the like, besides tire applications described below.

### <Tire>

A tire of the present disclosure is characterized by use of the rubber composition described above. The tire of the present disclosure is excellent in excellent low loss property, fracture characteristics (such as crack resistance), and wear resistance.

Areas onto which the rubber composition of the present disclosure to be applied in the tire are not particularly limited and can be appropriately selected depending on the purpose. Examples of the area include treads, base treads, sidewalls, side reinforcing rubber, and bead fillers.

Conventional methods can be used as the method for producing the tire. For example, a green tire is obtained by pasting overlappingly in sequence members normally used for producing tires, such as carcass layer, belt layer, tread layer, and the like, constituted by unvulcanized rubber and/or cord on the tire molding drum, and then removing the drum. Next, a desired tire (e.g., a pneumatic tire) can be produced by subjecting the green tire to heating vulcanization in accordance with a conventional method.

### EXAMPLES

The present disclosure will be described in further detail below with reference to examples, although the present disclosure is not limited to the following examples in any way.

### (Comparative Example 1)

Mixed were 24 µmol of trisbistrimethylsilylamide gadolinium {Gd[N(SiMe₃)₂]₃}, 48 µmol of 1-benzyl-1H-indene, 1.6 mmol of diisobutylaluminum hydride (DIBAL), 26.4 µmol of triphenylcarbonium tetrakis(pentafluorophenyl)borate [Ph₃C·B(C₆F₅)₄], and 20 mL of toluene. The mixture was left to stand at room temperature overnight or longer to prepare a catalyst composition.

The above-described catalyst composition was added to 700 mL of a cyclohexane solution containing 100 g of isoprene, and the mixture was subjected to polymerization at 50°C for 2 hours. A product was precipitated using isopropanol from the cement solution obtained, and the product was dried in a drum dryer to thereby obtain a polymer.

### (Example 1)

Added slowly was 1.6 mmol of diisobutylaluminum hydride (DIBAL) to 1.2 mmol of 5-hydroxy-1-pentene (compound having a polar functional group A) cooled to -78°C. The temperature of the mixed liquid was slowly raised to room temperature. Then, the liquid was heated and stirred in a sealed tube at 130°C to obtain a compound A/DIBAL mixed liquid.

The compound A/DIBAL mixed liquid obtained, 24 µmol of trisbistrimethylsilylamide gadolinium {Gd[N(SiMe₃)₂]₃}, 48 µmol of 1-benzyl-1H-indene, 26.4 µmol of triphenylcarbonium tetrakis(pentafluorophenyl)borate [Ph₃C·B(C₆F₅)₄], and 20 mL of toluene were mixed, and the mixture was left to stand at room temperature overnight or longer to prepare a catalyst composition.

The above-described catalyst composition was added to 700 mL of a cyclohexane solution containing 100 g of isoprene, and the mixture was subjected to polymerization at -20°C for 2 days. A product was precipitated using isopropanol from the cement solution obtained, and the product was dried in a drum dryer to thereby obtain a modified polymer.

### (Examples 2 to 5)

A modified polymer was obtained in the same manner as in Example 1 except that the following compounds having a polar functional group B to E were each used instead of the compound having a polar functional group A (the chemical formulas are illustrated below).

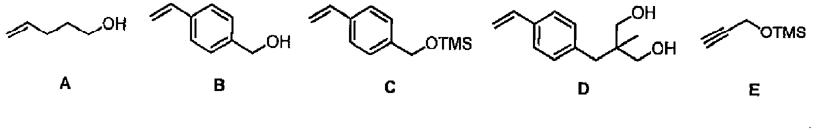

TMS in the chemical formula indicates a trimethylsilyl group.

### (Example 6)

To 480 µmol of the above-described compound D cooled to -78°C, 1.6 mmol of diisobutylaluminum hydride (DIBAL) was slowly added. The temperature of the mixed liquid was slowly raised to room temperature. Then, the liquid was heated and stirred in a sealed tube at 130°C to obtain a compound D/DIBAL mixed liquid.

The compound D/DIBAL mixed liquid obtained, 24 µmol of trisbistrimethylsilylamide gadolinium {Gd[N(SiMe₃)₂]₃}, 48 µmol of 1-benzyl-1H-indene, 26.4 µmol of triphenylcarbonium tetrakis(pentafluorophenyl)borate [Ph₃C·B(C₆F₅)₄], and 20 mL of toluene were mixed, and the mixture was left to stand at room temperature overnight or longer to prepare a catalyst composition.

The above-described catalyst composition was added to 700 mL of a cyclohexane solution containing 100 g of isoprene, and the mixture was subjected to polymerization at -20°C for 2 days. A product was precipitated using isopropanol from the cement solution obtained, and the product was dried in a drum dryer to thereby obtain a modified polymer.

### <Analysis of modification ratio>

The modification ratio of the (modified) polymer obtained was measured using NMR from the ratio between the integral value of the proton adjacent to the hydroxy group (around 3.5 ppm) and the integral value of the main chain. Additionally, as Reference Example 1, the modification ratio of a commercially available polyisoprene rubber [manufactured by JSR CORPORATION, trade name "IR2200"] was also measured. The results are provided in Table 1.

### <Analysis of gel content>

A sample obtained by adding 40 mL of toluene to 160 mg of the (modified)polymer obtained and leaving the mixture overnight was filtered through a metal mesh (100 mesh). The residue on the metal mesh was dried to obtain a gel, and the gel content was calculated. Additionally, as Reference Example 1, the gel content of a commercially available polyisoprene rubber [manufactured by JSR CORPORATION, trade name "IR2200"] was also measured. The results are provided in Table 1.

**[Table 1]**

| | Reference Example 1 | Comparative Example 1 | Example 1 | Example 2 | Example 3 | Example 4 | Example 5 | Example 6 |
|---|---|---|---|---|---|---|---|---|
| Compound having a polar functional group (C) | - | None | A | B | C | D | E | D |
| Modification ratio (%) | 0 | 0 | 50 | 80 | 103 | 123 | 40 | 30 |
| Gel content (%) | 1 | 1 | 1 | 30 | 40 | 80 | 50 | 10 |

### (Comparative Example 2)

Mixed were 24 µmol of trisbistrimethylsilylamide gadolinium {Gd[N(SiMe₃)₂]₃}, 48 µmol of 1-benzyl-1H-indene, 1.6 mmol of diisobutylaluminum hydride (DIBAL), 26.4 µmol of triphenylcarbonium tetrakis(pentafluorophenyl)borate [Ph₃C·B(C₆F₅)₄], and 20 mL of toluene. The mixture was left to stand at room temperature overnight or longer to prepare a catalyst composition.

The above-described catalyst composition was added to 700 mL of a cyclohexane solution containing 100 g of 1,3-butadiene, and the mixture was subjected to polymerization at 50°C for 2 hours. A product was precipitated using isopropanol from the cement solution obtained, and the product was dried in a drum dryer to thereby obtain a polymer.

### (Example 7)

Added slowly was 480 mmol of diisobutylaluminum hydride (DIBAL) to 360 mmol of allylamine (compound having a polar functional group F) cooled to -78°C. The temperature of the mixed liquid was raised to room temperature. Then, the liquid was heated and stirred in a sealed tube at 130°C to obtain a compound F/DIBAL mixed liquid.

The compound F/DIBAL mixed liquid obtained, 1.2 mmol of trisbistrimethylsilylamide gadolinium {Gd[N(SiMe₃)₂]₃}, 2.4 mmol of 1-benzyl-1H-indene, 1.32 mmol of triphenylcarbonium tetrakis(pentafluorophenyl)borate [Ph₃C·B(C₆F₅)₄], and 20 mL of toluene were mixed, and the mixture was left to stand at room temperature overnight or longer to prepare a catalyst composition.

The above-described catalyst composition was added to 700 mL of a cyclohexane solution containing 100 g of 1,3-butadiene, and the mixture was subjected to polymerization at room temperature for 3 minutes. A product was precipitated using isopropanol from the cement solution obtained, and the product was dried in a drum dryer to thereby obtain a modified polymer.

### (Examples 8 to 11)

A modified polymer was obtained in the same manner as in Example 7 except that each of the following compounds having a polar functional group G to I or the above-described compound having a polar functional group A was used instead of the compound having a polar functional group F (the chemical formula is illustrated below).

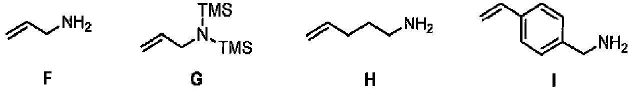

TMS in the chemical formula indicates a trimethylsilyl group.

### <Analysis of modification ratio>

In Examples 7 to 10, the compound having a polar functional group contained nitrogen. Thus, the total nitrogen content with respect to the modified polymer obtained was measured, and the modification ratio was calculated from the total nitrogen content.

Meanwhile, in Example 11, the modification ratio was measured using MNR as in Example 1. Additionally, as Reference Example 2, the modification ratio of a commercially available polybutadiene rubber [manufactured by JSR CORPORATION, trade name "BR01"] was also measured. The results are provided in Table 2.

**[Table 2]**

| | Reference Example 2 | Comparative Example 2 | Example 7 | Example 8 | Example 9 | Example 10 | Example 11 |
|---|---|---|---|---|---|---|---|
| Compound having a polar functional group (C) | - | None | F | G | H | I | A |
| Modification ratio (%) | 0 | 0 | 80 | 70 | 56 | 60 | 45 |

### (Comparative Example 3)

Mixed were 24 µmol of trisbistrimethylsilylamide gadolinium {Gd[N(SiMe₃)₂]₃}, 48 µmol of 1-benzyl-1H-indene, 1.6 mmol of diisobutylaluminum hydride (DIBAL), 26.4 µmol of triphenylcarbonium tetrakis(pentafluorophenyl)borate [Ph₃C·B(C₆F₅)₄], and 20 mL of toluene. The mixture was left to stand at room temperature overnight or longer to prepare a catalyst composition.

The above-described catalyst composition was added to 700 mL of a cyclohexane solution containing 100 g of 1,3-butadiene, and the mixture was subjected to polymerization at 50°C for 2 hours.

After the polymerization conversion ratio reached 100%, an excess of carbon dioxide was added to the polymerization reaction system and a modification reaction was performed at 50°C for 1 hour.

A product was precipitated using isopropanol from the cement solution obtained, and the product was dried in a drum dryer to thereby obtain a modified polymer.

### (Example 12)

Added slowly was 480 mmol of diisobutylaluminum hydride (DIBAL) to 360 mmol of allylamine (compound having a polar functional group F) cooled to -78°C. The temperature of the mixed liquid was raised to room temperature. Then, the liquid was heated and stirred in a sealed tube at 130°C to obtain a compound F/DIBAL mixed liquid.

The compound F/DIBAL mixed liquid obtained, 1.2 mmol of trisbistrimethylsilylamide gadolinium {Gd[N(SiMe₃)₂]₃}, 2.4 mmol of 1-benzyl-1H-indene, 1.32 mmol of triphenylcarbonium tetrakis(pentafluorophenyl)borate [Ph₃C·B(C₆F₅)₄], and 20 mL of toluene were mixed, and the mixture was left to stand at room temperature overnight or longer to prepare a catalyst composition.

The above-described catalyst composition was added to 700 mL of a cyclohexane solution containing 100 g of 1,3-butadiene, and the mixture was subjected to polymerization at room temperature for 3 minutes.

After the polymerization conversion ratio reached 100%, an excess of carbon dioxide was added to the polymerization reaction system and a modification reaction was performed at 50°C for 1 hour.

A product was precipitated using isopropanol from the cement solution obtained, and the product was dried in a drum dryer to thereby obtain a modified polymer.

### (Examples 13 to 16)

A modified polymer was obtained in the same manner as in Example 12 except that the following compounds having a polar functional group G to I or A were each used instead of the compound having a polar functional group F (the chemical formula is illustrated below).

### <Analysis of modification ratio>

The modification ratio of the (modified) polymer obtained was measured from the above-described total nitrogen content. The results are provided in Table 3.

**[Table 3]**

| | Reference Example 2 | Comparative Example 3 | Example 12 | Example 13 | Example 14 | Example 15 | Example 16 |
|---|---|---|---|---|---|---|---|
| Compound having a polar functional group (C) | - | None | F | G | H | I | A |
| Modifier | - | CO₂ | CO₂ | CO₂ | CO₂ | CO₂ | CO₂ |
| Modification ratio (%) | 0 | 0 | 80 | 70 | 56 | 60 | 45 |

### (Preparation and evaluation of rubber composition 1)

Compounded were 1.5 parts by mass of sulfur, 1 part by mass of a wax (manufactured by Seiko-Chemical Co., Ltd., trade name "Suntight"), 1 part by mass of an age resistor (manufactured by Ouchi Shinko Chemical Industrial Co., Ltd., trade name "NOCRAC 6C"), and 1.5 parts by mass of a vulcanization accelerator (manufactured by Ouchi Shinko Chemical Industrial Co., Ltd., trade name "Nocceler CZ") based on 100 parts by mass of the (modified) polymer obtained in Comparative Example 1 or Examples 1 to 6 using a common Banbury mixer to produce a rubber composition. Additionally, the crack resistance of the rubber compositions obtained was evaluated by the following method. The results are provided in Table 4.

Also, as Reference Example 3, the same components compounded as described above were compounded each in the same amount based on 100 parts by mass of the commercially available polyisoprene rubber of Reference Example 1 [manufactured by JSR CORPORATION, trade name "IR2200"] to produce a rubber composition, and the crack resistance was evaluated in the same manner.

### <Crack resistance>

A crack of 0.5 mm was given to the center part of a JIS No. 3 test piece, and repeated fatigue was given thereto at room temperature and at a strain of 100%. Then, the frequency of fatigue repetition until the test piece was broken was counted. With the value of Comparative Example 4 referred to as 100, the result was expressed as an index. A larger index indicates a high frequency of fatigue repetition until the test piece was broken, that is, excellent crack resistance (fracture characteristics).

**[Table 4]**

| | Reference Example 3 | Comparative Example 4 | Example 17 | Example 18 | Example 19 | Example 20 | Example 21 | Example 22 |
|---|---|---|---|---|---|---|---|---|
| (Modified) polymer | Polymer of Reference Example 1 | Polymer of Comparative Example 1 | Modified polymer of Example 1 | Modified polymer of Example 2 | Modified polymer of Example 3 | Modified polymer of Example 4 | Modified polymer of Example 5 | Modified polymer of Example 6 |
| Compound having a polar functional group (C) | - | None | A | B | C | D | E | D |
| Crack resistance (index) | 100 | 100 | 105 | 150 | 150 | 180 | 105 | 120 |

### (Preparation and evaluation of rubber composition 2)

Compounded were 40 parts by mass of HAF-GRADE CARBON BLACK [manufactured by Asahi Carbon Co., Ltd., trade name "Asahi #70"], 1.5 parts by mass of sulfur, 1 part by mass of a wax (manufactured by Seiko-Chemical Co., Ltd., trade name "Suntight"), 1 part by mass of an age resistor (manufactured by Ouchi Shinko Chemical Industrial Co., Ltd., trade name "NOCRAC 6C"), and 1.5 parts by mass of a vulcanization accelerator (manufactured by Ouchi Shinko Chemical Industrial Co., Ltd., trade name "Nocceler CZ") based on 100 parts by mass of the (modified) polymer obtained in Comparative Example 1 or Examples 1 to 6 using a common Banbury mixer to produce a rubber composition. Additionally, the crack resistance of the rubber compositions obtained was evaluated by the following method. The results are provided in Table 5.

Also, as Reference Example 4, the aforementioned components compounded were compounded each in the same amount as mentioned above based on 100 parts by mass of the commercially available polyisoprene rubber of Reference Example 1 [manufactured by JSR CORPORATION, trade name "IR2200"] to produce a rubber composition, and the crack resistance was evaluated in the same manner.

### <Crack resistance>

A crack of 0.5 mm was given to the center part of a JIS No. 3 test piece, and repeated fatigue was given thereto at room temperature and at a strain of 100%. Then, the frequency of fatigue repetition until the test piece was broken was counted. With the value of Comparative Example 5 referred to as 100, the result was expressed as an index. A larger index indicates a high frequency of fatigue repetition until the test piece was broken, that is, excellent crack resistance (fracture characteristics).

**[Table 5]**

| | Reference Example 4 | Comparative Example 5 | Example 23 | Example 24 | Example 25 | Example 26 | Example 27 | Example 28 |
|---|---|---|---|---|---|---|---|---|
| (Modified) polymer | Polymer of Reference Example 1 | Polymer of Comparative Example 1 | Modified polymer of Example 1 | Modified polymer of Example 2 | Modified polymer of Example 3 | Modified polymer of Example 4 | Modified polymer of Example 5 | Modified polymer of Example 6 |
| Compound having a polar functional group (C) | - | None | A | B | C | D | E | D |
| Crack resistance (index) | 95 | 100 | 120 | 125 | 125 | 150 | 105 | 110 |

### (Preparation and evaluation of rubber composition 3)

Compounded were 44 parts by mass of ISAF-GRADE CARBON BLACK [manufactured by Asahi Carbon Co., Ltd., trade name "Asahi #80"], 1.5 parts by mass of sulfur, 1 part by mass of a wax (manufactured by Seiko-Chemical Co., Ltd., trade name "Suntight"), 1 part by mass of an age resistor (manufactured by Ouchi Shinko Chemical Industrial Co., Ltd., trade name "NOCRAC 6C"), and 1.5 parts by mass of a vulcanization accelerator (manufactured by Ouchi Shinko Chemical Industrial Co., Ltd., trade name "Nocceler CZ") based on 60 parts by mass of a natural rubber and 40 parts by mass of the (modified) polymer obtained in Comparative Example 2 or Examples 7 to 11 using a common Banbury mixer to produce a rubber composition. Additionally, the low loss property of the rubber compositions obtained was evaluated by the following method. The results are provided in Table 6.

Also, as Reference Example 5, the aforementioned components compounded were compounded each in the same amount as mentioned above based on 60 parts by mass of a natural rubber and 40 parts by mass of the commercially available polybutadiene rubber of Reference Example 2 [manufactured by JSR CORPORATION, trade name "BR01"] to produce a rubber composition, and the low loss property was evaluated in the same manner.

### <Low loss property>

Using a viscoelasticity meter (manufactured by Rheometrics Inc.), tan δ was measured at a temperature of 50°C, a strain of 3%, and a frequency of 15 Hz. With the value of Reference Example 5 referred to as 100, the result was expressed as an index. A smaller index indicates smaller tan δ, that is, an excellent low loss property.

**[Table 6]**

| | Reference Example 5 | Comparative Example 6 | Example 29 | Example 30 | Example 31 | Example 32 | Example 33 |
|---|---|---|---|---|---|---|---|
| (Modified) polymer | Polymer of Reference Example 2 | Polymer of Comparative Example 2 | Modified polymer of Example 7 | Modified polymer of Example 8 | Modified polymer of Example 9 | Modified polymer of Example 10 | Modified polymer of Example 11 |
| Compound having a polar functional group (C) | - | None | F | G | H | I | A |
| Low loss property (index) | 100 | 95 | 88 | 87 | 81 | 82 | 94 |

### (Preparation and evaluation of rubber composition 4)

Compounded were 44 parts by mass of ISAF-GRADE CARBON BLACK [manufactured by Asahi Carbon Co., Ltd., trade name "Asahi #80"], 1.5 parts by mass of sulfur, 1 part by mass of a wax (manufactured by Seiko-Chemical Co., Ltd., trade name "Suntight"), 1 part by mass of an age resistor (manufactured by Ouchi Shinko Chemical Industrial Co., Ltd., trade name "NOCRAC 6C"), and 1.5 parts by mass of a vulcanization accelerator (manufactured by Ouchi Shinko Chemical Industrial Co., Ltd., trade name "Nocceler CZ") based on 50 parts by mass of a natural rubber and 50 parts by mass of the (modified) polymer obtained in Comparative Example 3 or Examples 12 to 16 using a common Banbury mixer to produce a rubber composition.

Additionally, the low loss property of the rubber compositions obtained was evaluated by the above-described method, and furthermore, the wear resistance thereof was evaluated by the following method. Note that the result of the low loss property was expressed as an index, with the value of Comparative Example 7 referred to as 100. The results are provided in Table 7.

Also, as Reference Example 6, the aforementioned components compounded were compounded each in the same amount as mentioned above based on 50 parts by mass of a natural rubber and 50 parts by mass of the commercially available polybutadiene rubber of Reference Example 2 [manufactured by JSR CORPORATION, trade name "BR01"] to produce a rubber composition, and the low loss property and the wear resistance were evaluated.

### <Wear resistance>

The abrasion loss was measured using a Lambourn abrasion tester at room temperature. The reciprocal number of the abrasion loss was calculated and expressed as an index, with the value of Comparative Example 7 referred to as 100. A larger index indicates a lower abrasion loss, that is, good abrasion resistance.

**[Table 7]**

| | Reference Example 6 | Comparative Example 7 | Example 34 | Example 35 | Example 36 | Example 37 | Example 38 |
|---|---|---|---|---|---|---|---|
| (Modified) polymer | Polymer of Reference Example 2 | Modified polymer of Comparative Example 3 | Modified polymer of Example 12 | Modified polymer of Example 13 | Modified polymer of Example 14 | Modified polymer of Example 15 | Modified polymer of Example 16 |
| Compound having a polar functional group (C) | - | None | F | G | H | I | A |
| Modifier | - | CO₂ | CO₂ | CO₂ | CO₂ | CO₂ | CO₂ |
| Low loss property (index) | 105 | 100 | 86 | 85 | 78 | 79 | 93 |
| Wear resistance (index) | 95 | 100 | 115 | 112 | 112 | 114 | 103 |

From the results indicated in Table 4 to Table 7, it can be seen that the rubber compositions of Examples according to the present disclosure are excellent in low loss property, crack resistance (fracture characteristics), and wear resistance.

### INDUSTRIAL APPLICABILITY

The catalyst composition of the present disclosure can be used in production of a modified conjugated diene-based polymer of which main chain is modified. The method for producing a modified conjugated diene-based polymer of the present disclosure also can be used for production of the polymer. The modified conjugated diene-based polymer of the present disclosure also can be used as a rubber component for a rubber composition. The rubber composition of the present disclosure also can be used for various rubber products including tires. Further, the tire of the present disclosure can be used as tires for various vehicles.

## Claims

1. A catalyst composition comprising:
a rare earth element-containing compound (A) containing a rare earth element compound or a reaction product of the rare earth element compound and a Lewis base,
an organic metal compound (B) represented by the following general formula (I):
YR¹ₐR²_{b}R³_{c} (I)
[wherein Y is a metal selected from Group 1, Group 2, Group 12, and Group 13 of the periodic table, R¹ and R² are each a hydrocarbon group having 1 to 10 carbon atoms or a hydrogen atom, and R³ is a hydrocarbon group having 1 to 10 carbon atoms, provided that R¹, R², and R³ may be the same as or different from one another, a is 1 and b and c are 0 when Y is a metal selected from Group 1 of the periodic table, a and b are 1 and c is 0 when Y is a metal selected from Group 2 and Group 12 of the periodic table, and a, b, and c are all 1 when Y is a metal selected from Group 13 of the periodic table], and
a compound having a polar functional group (C).

2. The catalyst composition according to claim 1, further comprising at least one compound selected from the group consisting of an ionic compound (D) and a halogen compound (E).

3. The catalyst composition according to claim 1 or 2, wherein a molar amount of the compound having a polar functional group (C) is 3 times or more a molar amount of the organic metal compound (B).

4. The catalyst composition according to any one of claims 1 to 3, wherein the compound having a polar functional group (C) has a carbon-carbon unsaturated bond in a molecule, in addition to the polar functional group.

5. The catalyst composition according to any one of claims 1 to 4, wherein the polar functional group of the compound having a polar functional group (C) has at least one selected from the group consisting of oxygen, nitrogen, sulfur, silicon, and phosphorus.

6. The catalyst composition according to any one of claims 1 to 5, wherein the polar functional group of the compound having a polar functional group (C) has at least one selected from the group consisting of an alcoholic hydroxyl group, an alkoxy group, and a substituted or unsubstituted amino group.

7. The catalyst composition according to any one of claims 1 to 6, wherein the molar amount of the compound having a polar functional group (C) is 30 times or more a molar amount of the rare earth element-containing compound (A).

8. A method for producing a modified conjugated diene-based polymer, comprising a step of polymerizing a conjugated diene compound in the presence of the catalyst composition according to any one of claims 1 to 7.

9. The method for producing a modified conjugated diene-based polymer according to claim 8, further comprising a step of reacting at least one compound selected from the group consisting of the following component (a) to component (h) with a polymerization product obtained in the step of polymerizing a conjugated diene compound:
component (a): a compound represented by the following general formula (II): 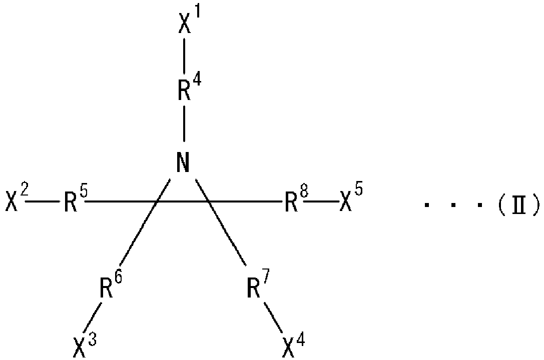 (wherein X¹ to X⁵ represent a hydrogen atom, a halogen atom, or a monovalent functional group including at least one selected from a carbonyl group, a thiocarbonyl group, an isocyanate group, a thioisocyanate group, an epoxy group, a thioepoxy group, a halogenated silyl group, a hydrocarbyloxysilyl group, and a sulfonyloxy group and excluding an active proton and an onium salt, X¹ to X⁵ may be the same or different from each other provided that at least one of them is not a hydrogen atom; R⁴ to R⁸ each independently represent a single bond or a divalent hydrocarbon group having 1 to 18 carbon atoms; and a plurality of aziridine rings may be bonded via any of X¹ to X⁵ and R⁴ to R⁸);
component (b): a halogenated organic metal compound, a metal halide compound, or an organic metal compound represented by R⁹ₙM¹Z₄₋ₙ, M¹Z₄, M¹Z₃, R¹⁰ₙM¹(-R¹¹-COOR¹²)₄₋ₙ or R¹⁰ₙM¹(-R¹¹-COR¹²)₄₋ₙ (wherein R⁹ to R¹¹ may be the same or different and are each a hydrocarbon group having 1 to 20 carbon atoms, R¹² is a hydrocarbon group having 1 to 20 carbon atoms and optionally containing a carbonyl group or an ester group on a side chain, M¹ is a tin atom, a silicon atom, a germanium atom, or a phosphorus atom, Z is a halogen atom, and n is an integer of 0 to 3);
component (c): a heterocumulene compound containing a Y¹=C=Y² bond in the molecule (wherein Y¹ is a carbon atom, an oxygen atom, a nitrogen atom, or a sulfur atom, and Y² is an oxygen atom, a nitrogen atom, or a sulfur atom, provided that Y¹ and Y² may be the same or different from each other);
component (d): a heterotricyclic compound having a structure represented by the following general formula (III) in the molecule: 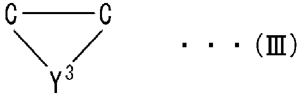 (wherein Y³ is an oxygen atom or a sulfur atom);
component (e): a haloisocyano compound;
component (f): a carboxylic acid, an acid halide, an ester compound, a carbonic acid ester compound, or an acid anhydride represented by R¹³-(COOH)ₘ, R¹⁴(COZ)ₘ, R¹⁵-(COO-R¹⁶), R¹⁷-OCOO-R¹⁸, R¹⁹-(COOCO-R²⁰)ₘ, or the following general formula (IV): 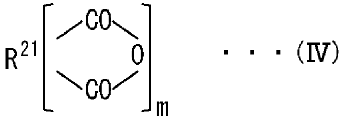 (wherein R¹³ to R²¹ may be the same or different and are each a hydrocarbon group having 1 to 50 carbon atoms, Z is a halogen atom, and m is an integer of 1 to 5);
component (g): a carboxylic acid metal salt represented by R²²ₖM²(OCOR²³)₄₋ₖ, R²⁴ₖM²(OCO-R²⁵-COOR²⁶)₄₋ₖ, or the following general formula (V): 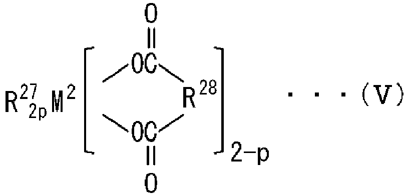 (wherein R²² to R²⁸ may be the same or different and are each a hydrocarbon group having 1 to 20 carbon atoms, M² is a tin atom, a silicon atom, or a germanium atom, k is an integer of 0 to 3, and p is an integer of 0 to 1); and
component (h): an N-substituted aminoketone, an N-substituted aminothioketone, an N-substituted aminoaldehyde, an N-substituted aminothioaldehyde, or a compound having a -C-(=Y³)-N< bond (wherein Y³ represents an oxygen atom or a sulfur atom).

10. A modified conjugated diene-based polymer produced by the production method according to claim 8 or 9.

11. A rubber composition comprising the modified conjugated diene-based polymer according to claim 10.

12. A tire in which the rubber composition according to claim 11 is used.
